# EUROPEAN PATENT APPLICATION

(11) **EP 4 114 029 A1**
(43) Date of publication of application: **04.01.2023**
(21) Application number: 21182788.6
(22) Date of filing: 30.06.2021
(51) Int. Cl.: H04R 1/02, H04R 7/04, G06F 1/16

(54) **DOCKING STATION WITH ACOUSTIC PANEL**

(71) Applicant: BSH Hausgeräte GmbH, 81739 München (DE)
(72) Inventor: Sagoo, Kiran Pal, 82256 Fürstenfeldbruck (DE)

(57) **Abstract**

A docking station (100) configured to dock a user device (300) is described. The docking station (100) comprises at least one active acoustic radiator (108) configured to render an audio signal. Furthermore, the docking station (100) comprises a panel-shaped back support (102) for holding a user device (300), and at least one actuator (201) configured to cause the panel-shaped back support (102) to vibrate for rendering an audio signal. In addition, the docking station (100) comprises a control unit (120) configured to control the radiator (108) and the actuator (201) for rendering an audio signal.

## Description

The present document relates to a docking station, which may be used within a household, notably within a kitchen, to provide support regarding user interaction with one or more household appliances.

A docking station may be used within a household, notably within a kitchen, to provide support for a household task, such as cooking, to a user of the docking station. The user may use the docking station for playing back an audio signal (e.g., music or audio instructions for a recipe or an answer by a voice assistant).

The present document addresses the technical problem of increasing the comfort of use of a docking station, in particular with regards to the quality of the audio rendering of the docking station. The technical problem is solved by each one of the independent claims. Preferred examples are described in the dependent claims.

According to an aspect, a docking station configured to dock a user device is described. The docking station may be designed to be placed on a table or a worktop within a kitchen. Furthermore, the docking station may be configured to hold a DIN A4 or DIN A5 sized user device (e.g., with a display size of up to 11 inches or 12 inches). For this purpose, the docking station comprises a back support.

The docking station comprises at least one active acoustic radiator (notably a loudspeaker) which is configured to render an audio signal. The radiator may be located in an acoustic chamber formed by a main body of the docking station. The acoustic chamber and/or the main body may have a cylindrical form. The main body may exhibit a longitudinal axis which may be oriented in parallel to the ground (e.g., a worktop) onto which the docking station is placed. The main body may e.g., have a diameter between 4cm and 8cm. Furthermore, the main body may e.g., have a length along the longitudinal axis between 10cm and 25cm.

In addition, the docking station may comprise one or more feet extending downwards from the main body and enabling the main body to be placed on a ground (e.g., a worktop). The one or more feet may extend along the longitudinal axis of the main body (e.g., from one end to the other end of the main body). The docking station may exhibit a front foot at a front side of the docking station (facing the user of the docking station, when the user is using the docking station). Alternatively, or in addition, the docking station may exhibit a rear foot (at the rear side of the docking station). By providing one or more feet, the docking station may be placed on a ground in a stable manner.

The one or more feet may be configured to hold the main body elevated at an elevation distance from the ground. The elevation distance may e.g., be between 1cm and 15cm. By positioning the main body (which comprises one or more radiators, e.g., loudspeakers) at a certain elevation distance from the ground, a docking station having a high audio quality and intelligibility may be provided.

As indicated above, the (elevated) main body may comprise one or more (active or passive) radiators for rendering an audio signal. The one or more radiators are preferably oriented at least partially towards the ground. In particular, the one or more radiators may be arranged such that a main emission direction of an audio signal that is emitted by the one or more radiators is oriented towards the ground. By way of example, the main emission direction may form an angle with ground having a magnitude which is greater than 0°, notably greater than 20°.

By providing a docking station having an elevated main body with one or more radiators that are oriented towards the ground that the docking station is standing on, the quality and the intelligibility of emitted audio signals may be increased, thereby increasing the comfort of use of the docking station.

As indicated above, the docking station comprises a back support. The back support may extend upwards from the main body, enabling a user device to be placed in conjunction with and/or onto the docking station. The back support may exhibit an angle between 45° and 75° relative to the ground that the docking station is standing on. The back support may form a flat backplane which is at least partially in contact with the backside of a (flat) user device that is placed onto the docking station. In other words, the back support may hold a user device from the back.

The docking station may be designed such that the back support can be detached from the main body or attached to the main body by a user of the docking station (e.g., using one or two hands). In particular, detaching and/or attaching may be performed without using a tool. As a result of this, a particularly comfortable docking station may be provided.

Hence, the docking station may comprise a panel-shaped back support for holding a user device. Furthermore, the docking station may comprise at least one actuator (e.g., a shaker and/or a voice coil) which is configured to cause the panel-shaped back support to vibrate for rendering an audio signal. The actuator may be part of the (possibly detachable) back support. The docking station may comprise a connector for providing an energy and/or data connection between the main body and the back support (when the back support is attached to the main body).

Hence, a docking station is described, which makes use of the flat back support for a user device as an acoustic panel, thereby increasing the quality and intelligibility of audio that is rendered by the docking station in an efficient manner.

As indicated above, the docking station comprises a control unit. The control unit may be configured to control the radiator and the actuator (possibly jointly) for rendering an audio signal. In particular, the control unit may be configured to determine whether or not a user device is placed on the back support of the docking station. This may be determined using a weight sensor of the docking station. Furthermore, the control unit may be configured to control the radiator and the actuator for rendering an audio signal in dependence on whether or not a user device is placed on the back support of the docking station. By distinguishing between different use situation (user device present or not), the audio quality of the docking station may be further improved.

The control unit may be configured to control the actuator to cause the panel-shaped back support to vibrate for rendering an audio signal, if it is determined that no user device is placed on the back support. Hence, the back support may be used selectively as an acoustic panel, if no user device is placed onto the docking station. In this case, the control unit may be configured to cause the actuator and the radiator of the docking station to jointly render an audio signal. In other words, the same (possibly multi-channel) audio signal may be rendered via the one or more radiators (emitting a first acoustic signal) and via the back support (emitting a second acoustic signal). The overlay of the first and the second acoustic signal may enable a particularly high audio quality of the docking station.

On the other hand, the control unit may be configured to prevent the actuator from causing the panel-shaped back support to vibrate, if it is determined that a user device is placed on the back support. In this case, one or more speakers of the user device may be used to improve audio rendering of the docking station. As indicated above, the control unit may be configured to communicate with a user device that is placed on the back support via a (wireless) communication link (such as Bluetooth). The control unit may be configured to cause, via the communication link, one or more speakers of the user device and may be configured to cause the radiator of the docking station to jointly render an audio signal (without making use of the back support as an acoustic panel), if it is determined that the user device is placed on the back support. As a result of this, a particularly high audio quality of the docking station may be achieved, if a user device is docked to the docking station.

The back support may be attached to the main body of the docking station along an edge, in particular along a straight edge, of the back support. The docking station may comprise different actuators, in particular at least three actuators, at different locations along the edge of the back support. By making use of multiple actuators (which are (evenly) distributed along an edge of the back support) for causing the back support to vibrate, the quality of the acoustic signals that are emitted by the back support may be improved.

The back support may be transparent for providing a user with a compact impression of the docking station. Alternatively, or in addition, the back support may comprise glass, in particular acrylic glass, thereby providing reliable acoustic properties of the acoustic panel.

The radiator and the back support may be oriented such that the main emission direction of the (first) acoustic signal that is emitted by the radiator and the main emission direction of the (second) acoustic signal that is emitted by the back support form an angle of at least 90°. In particular, the radiator may be oriented towards the ground that the docking station is placed on and the back support may be oriented away from the ground and/or towards a user facing the docking station. As a result of this, the audio quality of the docking station may be increased further.

The control unit may be configured to receive an audio signal to be rendered, notably from the user device that the docking station is communicatively coupled with. Furthermore, the control unit may be configured to control the radiator and the actuator for rendering of the audio signal.

According to a further aspect, a further docking station configured to dock a user device is described. It should be noted that all features (individually or in combination) which are described in conjunction with this docking station are also applicable to the other docking station (and vice versa).

The docking station comprises at least one active acoustic radiator configured to render an audio signal, and a back support for holding a user device. Furthermore, the docking station comprises a control unit configured to determine whether or not an acoustic panel device has been coupled to the docking station and/or has been placed on the back support of the docking station. The acoustic panel device may comprise a panel (e.g., a glass panel) which is configured to vibrate for rendering an audio signal. The vibration of the panel may be caused by an actuator of the acoustic panel device.

Furthermore, the control unit may be configured to control an actuator of the acoustic panel device to vibrate for rendering an audio signal, in particular for rendering an audio signal jointly with the radiator of the docking station, if it is determined that an acoustic panel device is coupled to the docking station and/or is placed on the back support.

Hence, a separate acoustic panel device may be provided as an accessory for a docking station, thereby increasing the audio quality of the docking station. The acoustic panel device comprises an acoustic panel (e.g., with a size of up to 11 inches or 12 inches). The acoustic panel device may have a rectangular shape (similar to a Tablet PC). However, opposed to a Tablet PC, the acoustic panel device does not comprise a display, but the acoustic panel (e.g., made of acrylic glass). This acoustic panel may be caused to vibrate by one or more actuators for emitting an acoustic signal. The one or more actuators may be placed in the center of the acoustic panel (on the backside of the acoustic panel). Alternatively, or in addition, the one or more actuators may be placed at one or more edges of the acoustic panel.

The docking station may comprise a charging and/or data module (e.g., located within the back support) configured to wirelessly charge an acoustic panel device which is located on the back support of the docking station, and/or configured to wirelessly communicate with an actuator of an acoustic panel device which is located on the back support of the docking station. As a result of this, the comfort-of-use of the docking station may be increased.

According to another aspect, an acoustic panel device configured to enhance audio rendering of a docking station is described. The docking station is configured to dock a user device that is placed on the back support of the docking station. The acoustic panel device may be configured to be placed on the back support of the docking station. By way of example, the acoustic panel device may have the size of a Tablet PC (wherein the display is replaced by an acoustic panel (e.g., made of glass).

Furthermore, the acoustic panel device comprises a panel, in particular a glass panel. In addition, the acoustic panel device comprises at least one actuator which is configured to cause the panel to vibrate for rendering an audio signal. The panel may have the size of a Tablet PC. In particular, the panel may take up the entire space of the acoustic panel device. Hence, a relatively large acoustic panel may be provided.

The acoustic panel device may comprise a data module for receiving data regarding the audio signal that is to be rendered from the control unit of the docking station. Hence, the acoustic panel device may be controlled by the control unit of the docking station, thereby enabling a high-quality audio rendering.

According to a further aspect, a method for controlling audio rendering at a docking station which is configured to dock a user device is described. The docking station comprises at least one active acoustic radiator which is configured to render an audio signal. Furthermore, the docking station comprises a panel-shaped back support for holding a user device. In addition, the docking station comprises at least one actuator configured to cause the panel-shaped back support to vibrate for rendering an audio signal.

The method comprises determining whether or not a user device is placed on the back support of the docking station. In addition, the method comprises controlling the radiator and the actuator for rendering an audio signal in dependence on whether or not a user device is placed on the back support of the docking station.

According to yet a further aspect, a method for controlling audio rendering at a docking station, which is configured to dock a user device, is described. The docking station comprises at least one active acoustic radiator, which is configured to render an audio signal. Moreover, according to this embodiment the docking station comprises a back support for holding a user device and a control unit. The method according to this embodiment comprises the step of determining whether or not an acoustic panel device has been coupled to the docking station and/or has been placed on the back support of the docking station; and the step of controlling an actuator of the acoustic panel device to vibrate for rendering an audio signal, in particular for rendering an audio signal jointly with the radiator, if it is determined that an acoustic panel device is coupled to the docking station and/or is placed on the back support.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including their preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Figure 1a shows a (smart) docking station in a perspective view;
Figure 1b shows an example docking station in a side view;
Figure 1c shows a front view of the docking station;
Figures 2a to 2c illustrate different views of a docking station comprising a back support which is used as an acoustic panel;
Figures 3a to 3b illustrate audio rending of a docking station in different use situations;
Figures 4a to 4d show an acoustic panel device for a docking station; and
Figure 5 shows a flow chart of an example method for controlling audio rendering of a docking station.

As outlined above, the present document is directed at increasing the comfort of use of a docking station, in particular with regards to audio rendering.

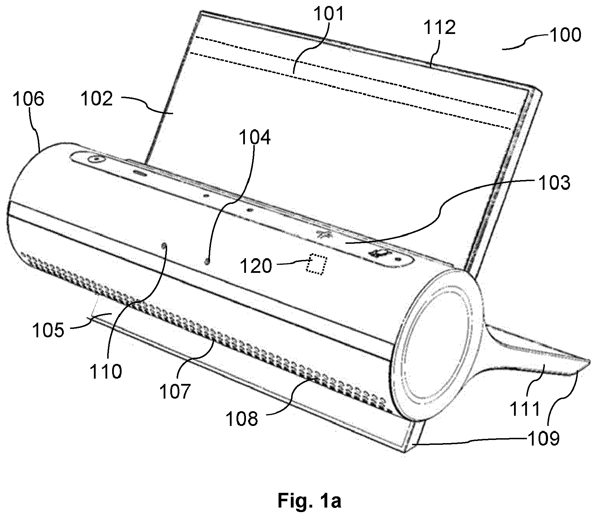

Figs. 1a to 1c show an example docking station 100. The (smart) docking station 100 comprises a main body 106, which may have a cylindrical form as illustrated in Fig. 1a. The main body 106 may comprise one or more electronic components such as a control unit 120, e.g., a microcontroller, of the docking station 100. Furthermore, the main body 106 may comprise a control panel 103 with one or more control elements, notably control buttons. The control panel 103 may enable a user to interact with the docking station 100, e.g., for speaker volume control or for quick touch interaction with the voice assistant (stop listening, start listening).

Alternatively, or in addition to a control panel 103, the docking station 100 may comprise a gesture sensor 104 (located e.g., on the main body 106), which is configured to sense gesture data regarding a (hand) gesture performed by a user of the docking station 100. The docking station 100 may be controlled in dependence of the gesture data (i.e., of the measurement data of the gesture sensor 104). In addition, the docking station 100 may comprise one or more light elements (not shown), notably light emitting diodes (LED), e.g., for providing status information regarding the status of the docking station 100 to a user of the docking station 100.

The main body 106 may further comprise one or more active speaker drivers (which are also referred to herein as loudspeakers) 108 which are configured to emit an audio signal. The one or more loudspeakers 108 may be located at a face side and/or at a shell surface of the (cylindrical) main body 106 or of the (cylindrical) acoustic chamber comprised within the main body 106. The main body 106 may act as and/or may enclose an acoustic chamber for improving the sound quality of the one or more loudspeakers 108. In addition, the docking station 100 may comprise one or more (passive) acoustic radiators 107 on the (cylindrical) surface of the main body 106 and/or at the one or more face sides of the main body 106.

The docking station 100 may comprise one or more base feet 105, 111, notably a base foot 105 at a front side facing the user and/or a rear foot 111 at a rear side of the docking station 100. The one or more base feet 105, 111 may be attached to the main body 106, and may extend from the main body 106 towards the ground, onto which the docking station 100 is placed. The one or more base feet 105, 111 may extend along the longitudinal axis of the (cylindrical) main body 106. In particular, the feet 105, 111 may have the form of a plate. As such the feet 105, 111 may be referred to herein as foot plates.

The one or more base feet 105, 111 may each comprise an isolator element 109, e.g., comprising silicone, at the end of the respective foot 105, 111, which is in contact with the ground that the docking station 100 is placed on. The use of an isolator element 109 allows the docking station 100 to be placed in a stable manner, preventing it from sliding over the surface that the docking station 100 is placed on (notably in case of touch interaction with the docking station 100 and/or when audio is played back). Furthermore, the docking station 100 may be isolated against (acoustic) vibrations.

In addition, the docking station 100 may comprise a holder, notably a back support, 102 which extends from the main body 106 upwards (i.e., away from the ground that the docking station 100 is placed on). The back support 102 may exhibit an angle with regards to the ground between 45° and 75°, when the docking station 100 is placed on the ground. The back support 102 may be designed as a support for a typical tablet PC (e.g., with a screen size between 8 inches and 13 inches), also being able to support smaller devices such as phones starting at 5 inches. The back support 102 may extend along the longitudinal axis of the main body 106 (from one face to the other face of the main body 106).

The back support 102 may exhibit one or more isolator stripes 101 which may extend horizontally across the back support 102, or may have at least two support pads. Furthermore, the back support 102 may comprise an isolator section 112 at the top end of the back support 102. The use of isolator stripes 101 and/or of an isolator section 112 allows an object, such as a tablet PC, to be placed onto the back support 102 in a stable manner. Furthermore, isolation of acoustic vibrations may be provided.

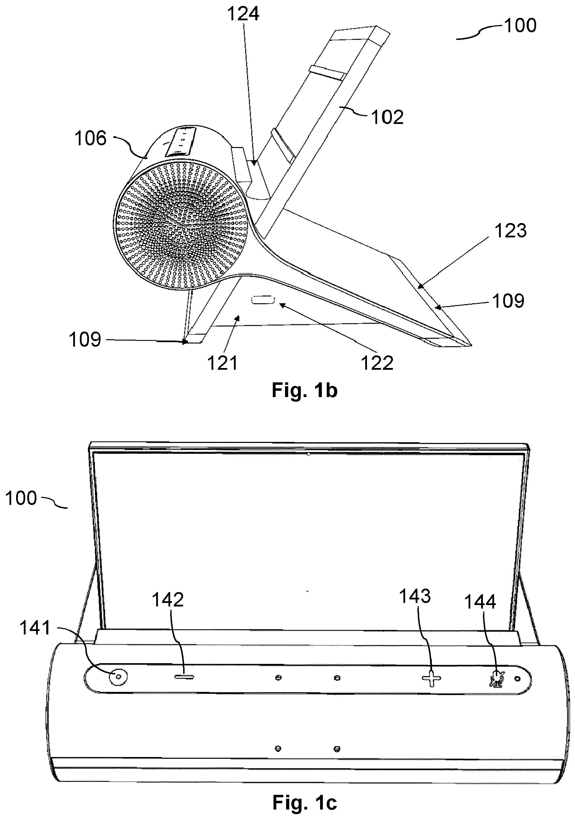

In addition, the docking station 100 may comprise a base support 124, as shown in Fig. 1b, which is located at the contact point between the main body 106 and the back support 102. The base support 124 may form a gap within which the lower edge of a user device, notably of a tablet PC, may be placed, in order to hold the user device in a stable manner on the back support 102. The base support 124 may comprise an isolating material, in order to allow vibrations of the docking station 100 (e.g., due to rending of an audio signal via a loudspeaker 108 of the docking station 100) to be isolated. Alternatively, or in addition, the base support 124 may comprise one or more presence sensors (e.g., weight sensors) for detecting the presence of a user device on the back support 102.

The control unit 120 of the docking station 100 may be configured to automatically establish a communication link with the user device, if it is determined that the user device has been placed in conjunction with, notably into the holder 102 of, the docking station 100. By way of example, a wireless communication link, such as a Bluetooth link, may be established between the docking station 100 and the user device.

Furthermore, the control unit 120 may be configured to receive an audio signal from the user device via the communication link, and to cause one or more speaker drivers 107, 108 of the docking station 100 to render the audio signal that has been received from the user device. Alternatively, or in addition, the control unit 120 may be configured to control the user device via the communication link (e.g., using gesture control and/or speech control).

The docking station 100 may comprise one or more microphones 110, e.g., at the main body 106, which are configured to capture acoustic microphone signals, notably speech signals, e.g., in order to enable speech control of the docking station 100 and/or of a user device (also referred to herein as electronic device) that is coupled with the docking station 100. The docking station 100, notably the control unit 120 of the docking station 100, may be configured to separate an audio signal that has been emitted by the docking station 100 from an acoustic microphone signal that has been captured by the one or more microphones 110 of the docking station 100, thereby enabling a reliable speech control, even when rendering an audio signal. The one or more microphones 110 may be oriented away from the one or more speakers 108 and/or the one or more radiators 107, for enabling a particularly reliable separation of an emitted audio signal from a captured microphone signal.

Figure 1b shows a side view of the docking station 100. The docking station 100 may comprise a housing 121 for one or more electronic components (e.g., for the control unit 120). The housing 121 may be located between the front foot 105 and the rear foot 111 of the docking station 100. Furthermore, the docking station 100 may comprise a data and/or power interface 122 (e.g., a USB interface) for data communication and/or for power supply (e.g., at the housing 121). In addition, the docking station 100 may comprise a section 123 for placing a power cord for a power supply of the docking station 100.

Figure 1c shows a front view of the docking station 100. The main body 106 of the docking station 100 may comprise various different (mechanical) input elements 141, 142, 143, 144 such as a control button 141 for activating or deactivating a virtual assistant, volume buttons 142, 143 and/or an on/off-button 144 for activating and for deactivating the one or more microphones 110.

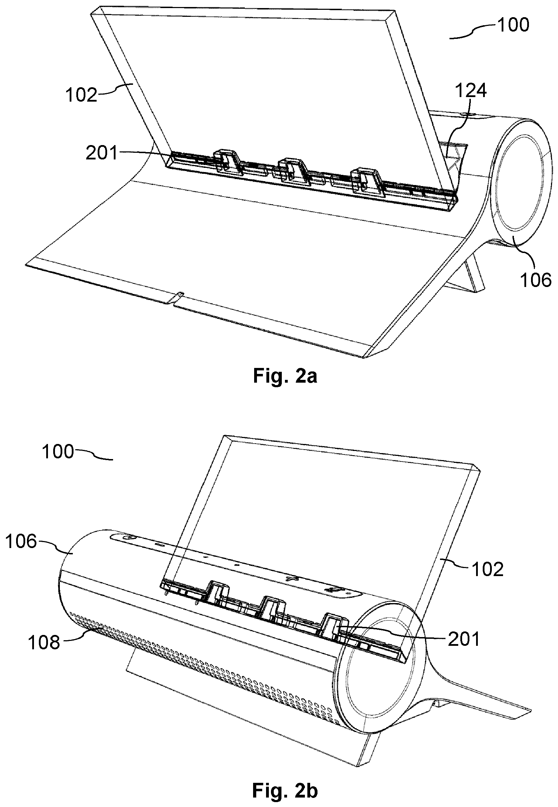

Due to the relatively compact size of the main body 106, the quality of the audio signals which are rendered by the one or more acoustic radiators 107, 108 may be limited. This may impact the intelligibility of audio instructions that are rendered by the docking station 100. Figs. 2a to 2c illustrate a docking station 100 which comprises an acoustic panel that is configured to emit acoustic signals. In particular, Figs. 2a to 2c show different views of a docking station 100 which makes use of the holder 102, in particular of the back support, of the docking station 100 as an acoustic panel. For this purpose, the docking station 100 comprises one or more acoustic actuators 201 which are configured to cause the holder 102 to vibrate (as a membrane of a loudspeaker), in order to cause the holder 102 to emit acoustic signals. The one or more acoustic actuators 201 may be located at the intersection between the holder 102 and the main body 106 (e.g., in direct vicinity to the base support 124).

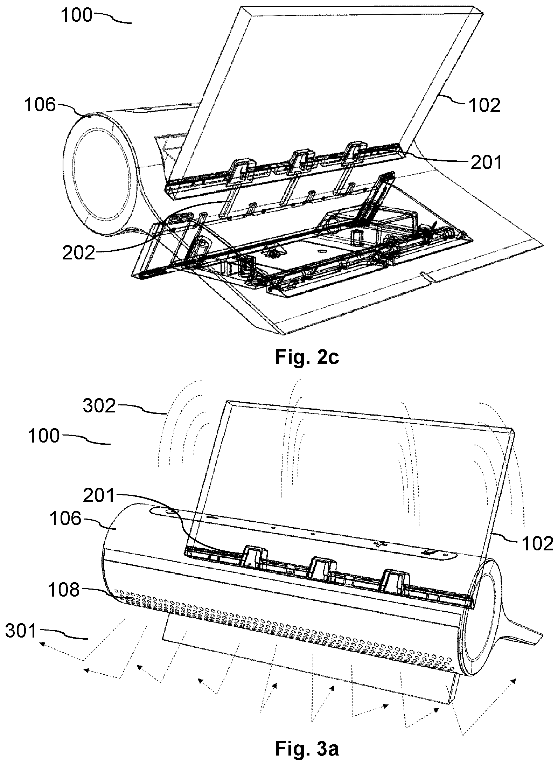

The holder 102 may be detachable from the main body 106. As illustrated in Fig. 2c, the main body 106 may comprise one or more connectors 202 for the corresponding one or more acoustic actuators 201 of the holder 102. The one or more connectors 202 may be configured to couple the one or more actuators 201 to the control unit 120 of the main body 106, when the holder 102 is attached to the main body 106. By providing a detachable holder 102, the flexibility of use of the docking station 100 may be increased.

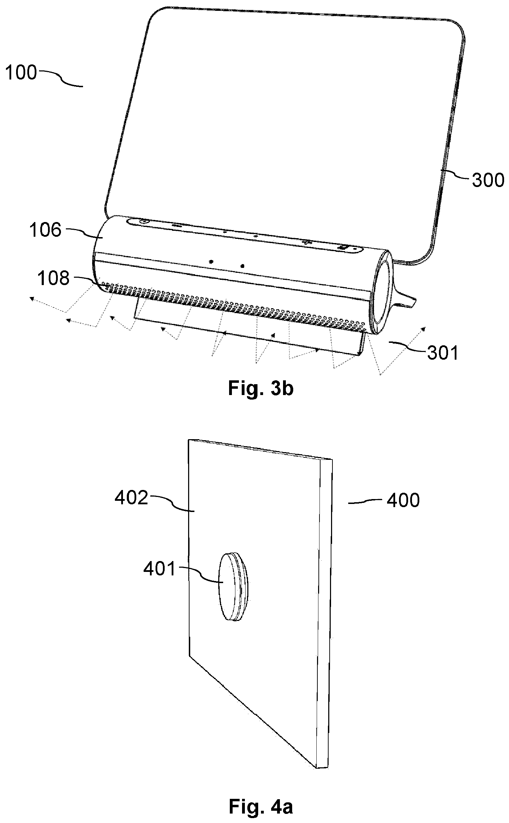

Figs 3a and 3b illustrate the generation of audio signals by the docking station 100. Fig. 3a illustrates a use situation, where the docking station 100 is used without a user device 300 being placed on the holder 102. In this case the holder 102 may be used to emit an acoustic signal 302. The acoustic signal 302 which is generated by the holder 102, i.e., by the holder 102 having the function of an acoustic panel, may be generated in addition to the acoustic signal 301 which is generated by the one or more acoustic radiators 107, 108 of the docking station 100. As a result of this, the overall audio quality of the docking station 100 may be improved.

Fig. 3b shows a use situation, where a user device 300 is placed on the holder 102 of the docking station 100. In this case, the control unit 120 of the docking station 100 may prevent an acoustic signal 302 to be emitted by the holder 102. In this use situation, acoustic rendering may be limited to the one or more acoustic radiators 107, 108 within the main body 106 of the docking station 100, thereby avoiding unpleasant vibrations of the user device 300 (which is touching the back support 102).

Hence, the control unit 120 of the docking station 100 may be configured to determine whether or not a user device 300 is located on the holder 102 of the docking station 100. If it is determined that no user device 300 is located on the holder 102, then the holder 102 may be used as an acoustic panel for emitting an acoustic signal 302. For this purpose, the one or more acoustic actuators 201 of the docking station 100 may be controlled to cause the holder 102 to vibrate. On the other hand, if it is determined that a user device 300 is located on the holder 102, then rendering of an acoustic signal 302 via the holder 102 may be prevented. Instead, one or more loudspeakers of the user device 300 may be used for audio rendering (in addition to audio rendering via the one or more acoustic radiators 107, 108 of the docking station 100).

Hence, means for enhancing the acoustic experience of a (smart) docking station 100 are described. In particular, a docking station 100 is described, which utilizes the back support 102 for a user device 300 as an active speaker. For this purpose, the back support 102 may be implemented as (transparent) acrylic glass with an actuator strip (comprising one or more actuators 201) at the bottom of the back support 102. When there is no user device 300 placed on the back support 102, then the back support 102 with the one or more actuators 201 act as an acoustic tweeter to enhance the audio experience of the docking station 100. As soon as a user device 300 is placed on the back support 102, the auto docking of the user device 300 is activated and the one or more actuators 201 stop vibrating, thereby stopping vibrations of the back support 102. In this case, audio is rendered (solely) via the one or more acoustic radiators 107, 108 of the main body 106.

As indicated above, the back support 102 may be replaceable and/or detachable. The back support 102 may comprise or may consist of a glass panel (e.g., acrylic glass) with an actuator strip attached to the bottom of the glass panel. The actuator strip may comprise at least three actuators 201 which are connected to the main electronics 120 of the docking station 100 through connectors 202.

The control unit 120 may be configured to cause the one or more actuators 201 to convert an electric (audio) signal into motion to cause the acoustic panel to vibrate, thereby achieving the radiation of sound waves 302. Hence, high quality audio rendering may be achieved through the combined rendering via the one or more acoustic radiators 107, 108 and the acoustic panel.

The control unit 120 of the docking station 100 may be configured to provide a continuous rendering of audio and/or video via a user device 300 and via the docking station 100. If the user device 300 is placed on the back support 102 and is docked to the docking station 100, audio rendering may be performed in combination via one or more speakers of the user device 300 and via the one or more acoustic radiators 107, 108 of the docking station 100 (without making use of the back support 102 as an acoustic panel). When the user removes the user device 300 from the back support 102, audio rendering may continue, while also making use of the back support 102 as an acoustic panel. As a result of this, the quality of audio / video rendering may be improved. In particular, a high audio quality may be achieved for the case where the user device 300 is included in the audio rendering and for the case where the user device 300 is not included in the audio rendering.

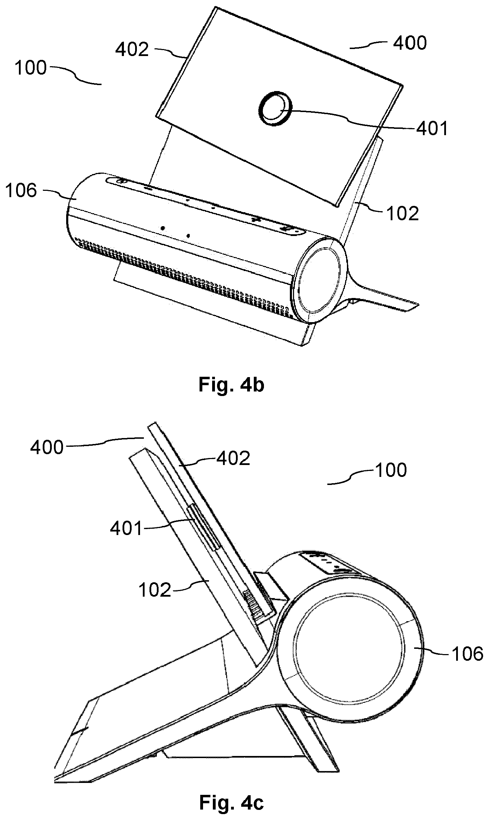

Figs. 4a to 4d illustrate a separate acoustic panel device 400 which is configured to be placed on the back support 102 of a docking station 100. The acoustic panel device 400 comprises one or more actuators 401, which may be attached to the back of the acoustic panel 402 of the acoustic panel device 400. The one or more actuators 401 may be configured to be controlled by the control unit 120 of the docking station 100.

As illustrated in Fig. 4c, the acoustic panel device 400 may be placed within the holder 102 of the docking station 100. The control unit 120 of the docking station 100 may be configured to detect that an acoustic panel device 400 has been placed within the holder 102 of the docking station 100. Furthermore, the control unit 120 may be configured to cause the one or more actuators 401 of the acoustic panel device 400 to vibrate, thereby causing the acoustic panel device 400, notably the acoustic panel 402, to emit an acoustic signal 302. Hence, the control unit 120 may be configured to integrate the separate acoustic panel device 400 into the audio rendering of the docking station 100, thereby improving the acoustic properties of the docking station 100.

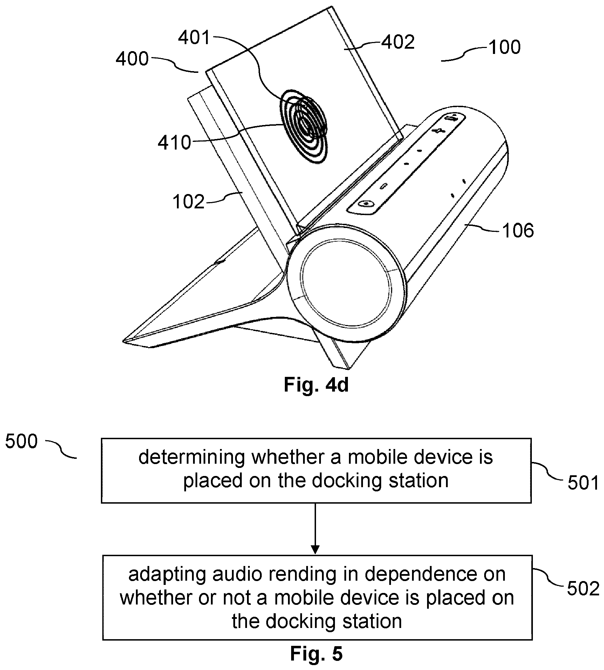

As shown in Fig. 4d, the docking station 100 may comprise a wireless charging and/or data module 410, e.g., integrated within the holder 102. The charging and/or data module 410 may be configured to provide the acoustic panel device 400 with electric energy. For this purpose, the charging and/or data module 410 may comprise a charging coil (e.g., for providing charging according to the Qi-standard). Alternatively, or in addition, the charging and/or data module 410 may be configured to provide a wireless communication link for exchanging data (e.g., regarding an audio signal which is to be rendered) between the control unit 120 of the docking station 100 and the one or more actuators 401.

Hence, an acoustic enhancing accessory 402 may be provided, which is configured to be placed on the back support 102 (like any user device 300). The accessory 402 may be a (glass) acoustic panel 402 with an additional electronics module 401, e.g., in the center of the panel 402. The electronics module 401 may comprise one or more actuators, a data communication (e.g., a Bluetooth) chip, a battery and/or a wireless charging coil. The acoustic panel device 400 may be charged through the back support 102 of the docking station 100 using integrated wireless charging. The acoustic panel device 400 may receive the audio signal through the communication chip, and the one or more actuators 401 touching the panel 402 may cause the panel 402 to vibrate, thereby generating sound 302.

The user may place the acoustic panel device 400 on the docking support area 102. The accessory 400 may be detected through auto-docking and may instantly establish a connection with the docking station 110. The built-in battery of the acoustic panel device 400 may be charged using an integrated charging coil 410 within the back support 102 of the docking station 100.

When the docking station 100 renders an audio signal, the one or more actuators 401 of the acoustic panel device 400 make the acoustic panel 402 vibrate, thereby causing the radiation of sound waves 302. By doing this, the audio quality may be improved, compared to audio rendering via the one more radiators 107, 108 of the main body 106 only.

As soon as the user removes the acoustic panel device 400 from the docking station 100, the connection to the docking station 100 may be interrupted, and the acoustic panel device 400 may stop vibrating. Audio rendering may then be limited to rendering via the one more radiators 107, 108 of the main body 106.

The acoustic panel device 400 may have the shape of a Tablet PC or smartphone. However, instead of a display and a housing, the acoustic panel device 400 may comprise an acoustic panel 402 (which takes up the entire space of the display and housing of a Tablet PC or smartphone). The acoustic panel 402 may be caused to vibrate using an actuator 401 (at the back of the acoustic panel 402).

Fig. 5 shows a flow chart of an example (e.g., computer-implemented) method 500 for controlling audio rendering at a docking station 100 which is configured to dock a user device 300. The docking station 100 comprises at least one active acoustic radiator 108 which is configured to render an audio signal. Furthermore, the docking station 100 comprises a panel-shaped back support 102 for holding a user device 300 (such as a Tablet PC or smartphone). In addition, the docking station 100 comprises at least one actuator 201 configured to cause the panel-shaped back support 102 to vibrate for rendering an audio signal. Hence, the docking station 100 may comprise a flat back support 102 that may be used as an acoustic panel for enhancing audio rendering of the docking station 100.

The method 500 comprises determining 501 whether or not a user device 300 is placed on the back support 102 of the docking station 100. This may be determined based on measurement data of a sensor, e.g., a weight sensor or a light sensor, of the docking station 100.

Furthermore, the method 500 comprises controlling 502 the radiator 108 and the actuator 201 for (jointly) rendering an audio signal in dependence on whether or not a user device 300 is placed on the back support 102 of the docking station 100. In particular, the back support 102 may be used selectively for audio rendering, if no user device 300 is placed on the back support 102, thereby increasing the audio quality of the docking station 100 in an efficient manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A docking station (100) configured to dock a user device (300); wherein the docking station (100) comprises
- at least one active acoustic radiator (108) configured to render an audio signal;
- a panel-shaped back support (102) for holding a user device (300);
- at least one actuator (201) configured to cause the panel-shaped back support (102) to vibrate for rendering an audio signal; and
- a control unit (120) configured to control the radiator (108) and the actuator (201) for rendering an audio signal.

2. The docking station (100) according to claim 1, wherein the control unit (120) is configured to
- determine whether or not a user device (300) is placed on the back support (102) of the docking station (100); and
- control the radiator (108) and the actuator (201) for rendering an audio signal in dependence on whether or not a user device (300) is placed on the back support (102) of the docking station (100).

3. The docking station (100) according to claim 2, wherein the control unit (120) is configured to
- control the actuator (201) to cause the panel-shaped back support (102) to vibrate for rendering an audio signal, if it is determined that no user device (300) is placed on the back support (102); and/or
- prevent the actuator (201) from causing the panel-shaped back support (102) to vibrate, if it is determined that a user device (300) is placed on the back support (102).

4. The docking station (100) according to any of claims 2 to 3, wherein the control unit (120) is configured to
- communicate with a user device (300) that is placed on the back support (102) via a communication link; and
- cause, via the communication link, one or more speakers of the user device (300) and cause the radiator (108) of the docking station (100) to jointly render an audio signal, if it is determined that the user device (300) is placed on the back support (102).

5. The docking station (100) according to any of claims 2 to 4, wherein the control unit (120) is configured to cause the actuator (201) and the radiator (108) of the docking station (100) to jointly render an audio signal, if it is determined that no user device (300) is placed on the back support (102).

6. The docking station (100) according to any of the previous claims, wherein
- the back support (102) is detachable from a main body (106) of the docking station (100);
- the actuator (201) is part of the detachable back support (102); and
- the docking station (100) comprises a connector (202) for providing an energy and/or data connection between the main body (106) and the back support (102), when the back support (102) is attached to the main body (106).

7. The docking station (100) according to any of the previous claims, wherein
- the back support (102) is attached to a main body (106) of the docking station (100) along an edge, in particular along a straight edge, of the back support (102); and
- the docking station (100) comprises different actuators (201), in particular at least three actuators (201), at different locations along the edge of the back support (102).

8. The docking station (100) according to any of the previous claims, wherein
- the back support (102) is transparent; and/or
- the back support (102) comprises glass, in particular acrylic glass.

9. The docking station (100) according to any of the previous claims, wherein
- the radiator (108) is located in an acoustic chamber formed by a main body (106) of the docking station (100); and
- in particular the acoustic chamber has a cylindrical form.

10. The docking station (100) according to any of the previous claims, wherein
- the radiator (108) and the back support (102) are oriented such that a main emission direction of an acoustic signal (301) that is emitted by the radiator (108) and a main emission direction of an acoustic signal (302) that is emitted by the back support (102) form an angle of at least 90°; and/or
- the radiator (108) is oriented towards a ground that the docking station (100) is placed on and the back support (102) is oriented away from the ground and towards a user facing the docking station (100).

11. The docking station (100) according to any of the previous claims, wherein the control unit (120) is configured to
- receive an audio signal to be rendered, notably from a user device (300) that the docking station (100) is communicatively coupled with; and
- control the radiator (108) and the actuator (201) for rendering of the audio signal.

12. A docking station (100) configured to dock a user device (300); wherein the docking station (100) comprises
- at least one active acoustic radiator (108) configured to render an audio signal;
- a back support (102) for holding a user device (300); and
- a control unit (120) configured to
- determine whether or not an acoustic panel device (400) has been coupled to the docking station (100) and/or has been placed on the back support (102) of the docking station (100); and
- control an actuator (401) of the acoustic panel device (400) to vibrate for rendering an audio signal, in particular for rendering an audio signal jointly with the radiator (108), if it is determined that an acoustic panel device (400) is coupled to the docking station (100) and/or is placed on the back support (102).

13. The docking station (100) according to claim 12, wherein the docking station (100) comprises a charging and/or data module (410) configured to
- wirelessly charge an acoustic panel device (400) which is located on the back support (102) of the docking station (100); and/or
- wirelessly communicate with the actuator (401) of an acoustic panel device (400) which is located on the back support (102) of the docking station (100).

14. An acoustic panel device (400) configured to enhance audio rendering of a docking station (100) which is configured to dock a user device (300) that is placed on a back support (102) of the docking station (100); wherein
- the acoustic panel device (400) is configured to be placed on the back support (102) of the docking station (100);
- the acoustic panel device (400) comprises a panel, in particular a glass panel;
- the acoustic panel device (400) comprises at least one actuator (401) configured to cause the panel to vibrate for rendering an audio signal; and
- the acoustic panel device (400) comprises a data module for receiving data regarding the audio signal that is to be rendered from a control unit (120) of the docking station (100).

15. A method (500) for controlling audio rendering at a docking station (100) which is configured to dock a user device (300); wherein the docking station (100) comprises at least one active acoustic radiator (108) configured to render an audio signal; wherein the docking station (100) comprises a panel-shaped back support (102) for holding a user device (300); and wherein the docking station (100) comprises at least one actuator (201) configured to cause the panel-shaped back support (102) to vibrate for rendering an audio signal; wherein the method (500) comprises,
- determining (501) whether or not a user device (300) is placed on the back support (102) of the docking station (100); and
- controlling (502) the radiator (108) and the actuator (201) for rendering an audio signal in dependence on whether or not a user device (300) is placed on the back support (102) of the docking station (100).

## Amended claims

### Amended claims in accordance with Rule 137(2) EPC.

1. A docking station (100) configured to dock a user device (300); wherein the docking station (100) comprises
- at least one active acoustic radiator (108) configured to render an audio signal;
- a panel-shaped back support (102) for holding a user device (300);
- at least one actuator (201) configured to cause the panel-shaped back support (102) to vibrate for rendering an audio signal; and
- a control unit (120) configured to determine whether or not a user device (300) is placed on the back support (102) of the docking station (100) and control the radiator (108) and the actuator (201) for rendering an audio signal in dependence on whether or not the user device (300) is placed on the back support (102) of the docking station (100);
**characterized in that** the control unit (120) is further configured to
- control the actuator (201) to cause the panel-shaped back support (102) to vibrate for rendering an audio signal, if it is determined that no user device (300) is placed on the back support (102); and/or
- prevent the actuator (201) from causing the panel-shaped back support (102) to vibrate, if it is determined that a user device (300) is placed on the back support (102).

2. The docking station (100) according to claim 1, wherein the control unit (120) is configured to
- communicate with the user device (300) when it is placed on the back support (102) via a communication link; and
- cause, via the communication link, one or more speakers of the user device (300) and cause the radiator (108) of the docking station (100) to jointly render an audio signal, if it is determined that the user device (300) is placed on the back support (102).

3. The docking station (100) according to any of claims 1 to 2, wherein the control unit (120) is configured to cause the actuator (201) and the radiator (108) of the docking station (100) to jointly render an audio signal, if it is determined that no user device (300) is placed on the back support (102).

4. The docking station (100) according to any of the previous claims, wherein
- the back support (102) is detachable from a main body (106) of the docking station (100);
- the actuator (201) is part of the detachable back support (102); and
- the docking station (100) comprises a connector (202) for providing an energy and/or data connection between the main body (106) and the back support (102), when the back support (102) is attached to the main body (106).

5. The docking station (100) according to any of the previous claims, wherein
- the back support (102) is attached to a main body (106) of the docking station (100) along an edge, in particular along a straight edge, of the back support (102); and
- the docking station (100) comprises different actuators (201), in particular at least three actuators (201), at different locations along the edge of the back support (102).

6. The docking station (100) according to any of the previous claims, wherein
- the back support (102) is transparent; and/or
- the back support (102) comprises glass, in particular acrylic glass.

7. The docking station (100) according to any of the previous claims, wherein
- the radiator (108) is located in an acoustic chamber formed by a main body (106) of the docking station (100); and
- in particular the acoustic chamber has a cylindrical form.

8. The docking station (100) according to any of the previous claims, wherein
- the radiator (108) and the back support (102) are oriented such that a main emission direction of an acoustic signal (301) that is emitted by the radiator (108) and a main emission direction of an acoustic signal (302) that is emitted by the back support (102) form an angle of at least 90°; and/or
- the radiator (108) is oriented towards a ground that the docking station (100) is placed on and the back support (102) is oriented away from the ground and towards a user facing the docking station (100).

9. The docking station (100) according to any of the previous claims, wherein the control unit (120) is configured to
- receive an audio signal to be rendered, notably from a user device (300) that the docking station (100) is communicatively coupled with; and
- control the radiator (108) and the actuator (201) for rendering of the audio signal.

10. A docking station (100) configured to dock a user device (300) or an acoustic panel device (400) according to claim 12; wherein the docking station (100) comprises
- at least one active acoustic radiator (108) configured to render an audio signal;
- a back support (102) for holding a user device (300) or holding an acoustic panel device (400) according to claim 12; and
- a control unit (120) configured to
- determine whether or not an acoustic panel device (400) or a user device (300) has been coupled to the docking station (100) and/or has been placed on the back support (102) of the docking station (100); and
- control the radiator (108) and the acoustic panel device (400) for rendering an audio signal in dependence on whether or not the acoustic panel device (400) or the user device (300) is placed on the back support (102) of the docking station (100);
**characterized in that** the control unit (120) is further configured to
- control an actuator (401) of the acoustic panel device (400) to vibrate for rendering an audio signal, in particular for rendering an audio signal jointly with the radiator (108), if it is determined that the acoustic panel device (400) is coupled to the docking station (100) and/or is placed on the back support (102) and/or
- prevent the actuator (401) of the acoustic panel device (400) to vibrate, if it is determined that the user device (300) is placed on the back support (102).

11. The docking station (100) according to claim 10, wherein the docking station (100) comprises a charging and/or data module (410) configured to
- wirelessly charge an acoustic panel device (400) which is located on the back support (102) of the docking station (100); and/or
- wirelessly communicate with the actuator (401) of an acoustic panel device (400) which is located on the back support (102) of the docking station (100).

12. An acoustic panel device (400) configured to enhance audio rendering of a docking station (100) according to claim 10 or 11, which is configured to dock a user device (300) that is placed on a back support (102) of the docking station (100); wherein
- the acoustic panel device (400) is configured to be placed on the back support (102) of the docking station (100) according to claim 10 or 11;
- the acoustic panel device (400) comprises a panel, in particular a glass panel;
- the acoustic panel device (400) comprises at least one actuator (401) configured to cause the panel to vibrate for rendering an audio signal; and
- the acoustic panel device (400) comprises a data module for receiving data regarding the audio signal that is to be rendered from a control unit (120) of the docking station (100).

13. A method (500) for controlling audio rendering at a docking station (100) which is configured to dock a user device (300); wherein the docking station (100) comprises at least one active acoustic radiator (108) configured to render an audio signal; wherein the docking station (100) comprises a panel-shaped back support (102) for holding a user device (300); and wherein the docking station (100) comprises at least one actuator (201) configured to cause the panel-shaped back support (102) to vibrate for rendering an audio signal; wherein the method (500) comprises,
- determining (501) whether or not a user device (300) is placed on the back support (102) of the docking station (100); and
- controlling (502) the radiator (108) and the actuator (201) for rendering an audio signal in dependence on whether or not a user device (300) is placed on the back support (102) of the docking station (100);
**characterized in that**
- the actuator (201) is controlled to cause the panel-shaped back support (102) to vibrate for rendering an audio signal, if it is determined that no user device (300) is placed on the back support (102); and/or prevent the actuator (201) from causing the panel-shaped back support (102) to vibrate, if it is determined that a user device (300) is placed on the back support (102).

14. A method (500) for controlling audio rendering at a docking station (100) which is configured to dock a user device (300) or an acoustic panel device (400); wherein the docking station (100) comprises at least one active acoustic radiator (108) configured to render an audio signal; wherein the docking station (100) comprises a back support (102) for holding a user device (300) or an acoustic panel device (400); wherein the method (500) comprises,
- determining (501) whether or not an acoustic panel device (400) or a user device (300) has been coupled to the docking station (100) and/or has been placed on the back support (102) of the docking station (100); and
- controlling (502) the radiator (108) and the acoustic panel device (400) for rendering an audio signal in dependence on whether or not the acoustic panel device (400) or the user device (300) is placed on the back support (102) of the docking station (100);
**characterized in that**
- the actuator (201) of the acoustic panel device (400) is controlled to vibrate for rendering an audio signal, in particular for rendering an audio signal jointly with the radiator (108), if it is determined that the acoustic panel device (400) is coupled to the docking station (100) and/or is placed on the back support (102) and/or
- prevent the actuator (401) of the acoustic panel device (400) to vibrate, if it is determined that the user device (300) is placed on the back support (102).
